# EUROPÄISCHE PATENTSCHRIFT

(11) **EP 0 825 082 B1**
(45) Veröffentlichungstag und Bekanntmachung des Hinweises auf die Patenterteilung: **27.03.2002**
(21) Anmeldenummer: 97112593.5
(22) Anmeldetag: 23.07.1997
(51) Int. Cl.: B61D 17/00, B29C 69/00, B29C 53/58

(54) **Wagenkasten in Hybridbauweise und Verfahren zu seiner Herstellung**
Vehicle body of hybrid construction and method of its manufacturing
Caisse de véhicule à construction hybride et méthode de sa fabrication

(30) Priorität: 15.08.1996 EP 96810542
(43) Veröffentlichungstag der Anmeldung: 25.02.1998
(73) Patentinhaber: INVENTIO AG, CH-6052 Hergiswil (CH)
(72) Erfinder: Anderegg, Kurt, Dr. Dipl.-Ing., 9424 Rheineck (CH); Niedermeier, Michael, Dr. Dipl.-Ing., 9400 Rorschacherberg (CH)

(56) Entgegenhaltungen:
- DE-C- 662 652
- FR-A- 2 692 541
- US-A- 3 713 679

## Beschreibung

Die Erfindung betrifft einen Wagenkasten in Hybridbauweise und ein Verfahren zu seiner Herstellung, bei dem auf einem formgebenden Wickeldorn ein Wickelkörper gewickelt wird, der in Längsrichtung in Wickelkörperhälften aufgetrennt wird, die als Bauteile für den Wagenkasten verwendet werden.

Aus der Offenlegungsschrift DE 1 778 493 ist ein Verfahren zur Herstellung von Waggondächern aus glasfaserverstärktem Kunstharz bekannt geworden. Dabei wird ein Wickelkörper hergestellt und in der Längsrichtung aufgetrennt, sodass die Trennlinien die Dachkanten der Dachschalen bilden. Ein mit Kunstharz getränkter Glasfaserstrang wird auf einen um seine Längsachse rotierender Wickelkern schraubenförmig in mehreren einander kreuzenden Lagen gewickelt. Nach Beendigung des Wickelvorganges und genügender Aushärtung des Kunstharzes wird die Wicklung entlang einer dem Verlauf der Dachkanten entsprechenden Nut aufgetrennt, wobei je eine Hälfte als Dachschale verwendet wird.

Nachteilig beim bekannten Verfahren ist, dass an den stumpfen Dachkanten der Dachschalen Bohrungen angebracht werden müssen, durch die Schrauben für die Verbindung mit der übrigen Waggonstruktur gesteckt werden. Aus Bohrungen und Schrauben bestehende Verbindungen sind statisch gesehen Schwachstellen in der Waggonstruktur und können leicht ausreissen.

Hier will die Erfindung Abhilfe schaffen. Die Erfindung, wie sie in Anspruch 1 gekennzeichnet ist, löst die Aufgabe, die Nachteile des bekannten Verfahrens zu vermeiden und ein Verfahren für eine Hybridbauweise eines Wagenkastens anzugeben, bei der Wickelbauweise und Profilbauweise fertigungsgünstig und materialsparend kombiniert werden.

Die Aufgabe wird gemäss Anspruch 1 dadurch gelöst, dass nur Boden- und Dachschale in Wickelbauweise produziert werden und die Fensterreihe in Profilbauweise mit geeigneten Verbindungselementen angebracht wird.

Die Aufgabe wird weiterhin mit einem Wagenkasten nach Anspruch 10 gelöst.

Die durch die Erfindung erreichten Vorteile sind im wesentlichen darin zu sehen, dass die Fensterausschnitte der herkömmlichen Wickelbauweise entfallen, was eine wesentliche Verminderung der bei einem im integralen Wickelverfahren hergestellten Wagenkasten entstehende Abfallmenge bedeutet. Weiter vorteilhaft ist, dass ein um die Fensterhöhe reduzierter Dornquerschnitt verwendet werden kann. Weiter vorteilhaft ist, dass der nur aus Dachschale und Bodenschale bestehende Wickelkörper wegen seiner geringeren Grösse für Nacharbeiten einfacher zu handhaben ist. Ausserdem sind in Hybridbauweise hergestellte Wagenkasten einfacher zu reparieren, weil einzelne Wagenkastensegmente austauschbar sind. Weiter vorteilhaft ist die Herstellung eines aus zwei Dachschalen oder zwei Bodenschalen bestehenden Wickelkörpers, wobei für den Wickelkörper mit den Dachschalen kostengünstige Werkstoffe verwendet werden können und für den Wickelkörper mit den Bodenschalen hochbelastbare Faserwerkstoffe verwendet werden können. Auch kann der Aufbau des Wickels entsprechend den Anforderungen an die Dachschale oder an die Bodenschale gewählt werden. Das Einwickeln der Verbindungselemente in die Schalenbauteile gewährleistet ausreichende Festigkeit des gesamten Wagenkastens und verhindert ein Ausreissen der Befestigungen.

Im folgenden wird die Erfindung anhand von mehrere Ausführungsbeispiele darstellenden Zeichnungen näher erläutert.
Es zeigen:
- Fig. 1: eine schematische Darstellung eines Wickelkörpers mit Längsprofilen,
- Fig. 1a: Einzelheiten des Längsprofiles,
- Fig. 2: mittels Fenstersäulen verbundene Dachschale und Bodenschale eines in Hybridbauweise hergestellten Wagenkastens,
- Fig. 2a: Einzelheiten der Fenstersäulen,
- Fig. 3: ein Eckelement für die Verbindung der Fenstersäulen mit den Längsprofilen,
- Fig. 4: mittels steckbaren Fensterrahmen verbundene Dachschale und Bodenschale eines in Hybridbauweise hergestellten Wagenkastens,
- Fig. 5: Einzelheiten der mittels steckbaren Fensterrahmen verbundenen Dachschale und Bodenschale,
- Fig. 6 bis 10: Ausführungsvarianten eines im Fensterrahmen integrierten Steckelementes,
- Fig. 11: einen Wagenkasten in Hybridbauweise mit im steckbaren Fensterrahmen vormontierten Fensterscheiben,
- Fig. 12: eine Wickeldornkontur für einen aus Dachschale und Bodenschale bestehenden Wickelkörper zur Herstellung eines Niederflurwagens in Hybridbauweise,
- Fig. 13: einen Niederflurwagen in Hybridbauweise,
- Fig. 14: Einzelheiten der Bodenschale des Niederflurwagens,
- Fig. 15: eine Wickeldornkontur für einen aus zwei Dachschalen bestehenden Wickelkörper und
- Fig. 16: eine Wickeldornkontur für einen aus zwei Bodenschalen bestehenden Wickelkörper.

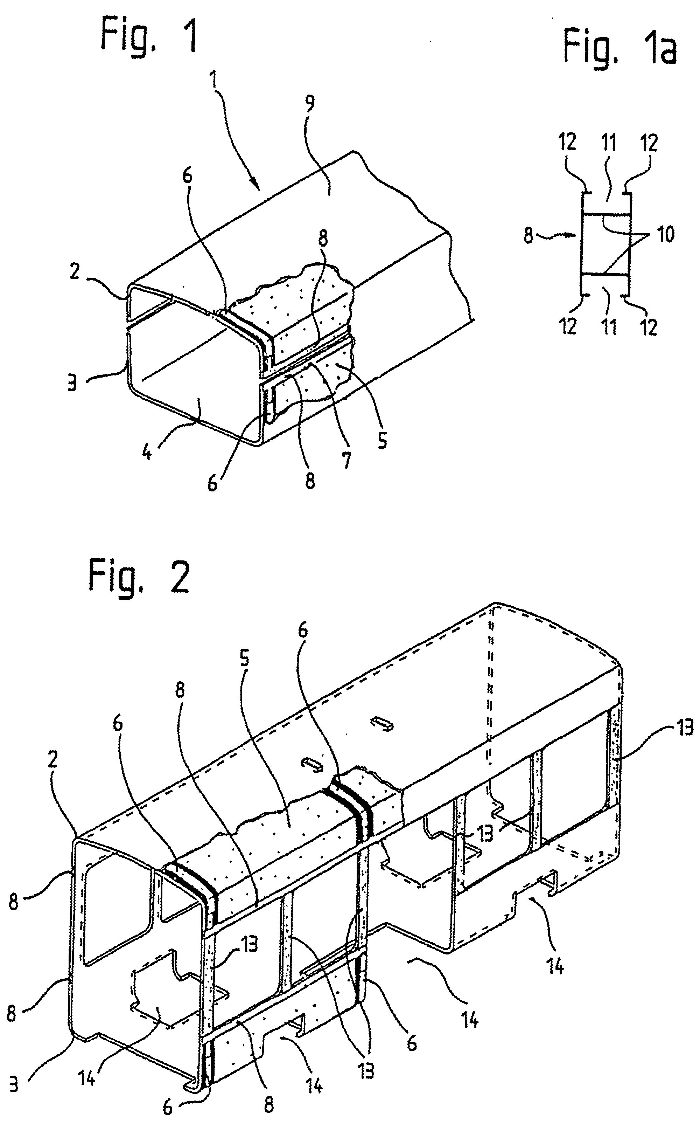

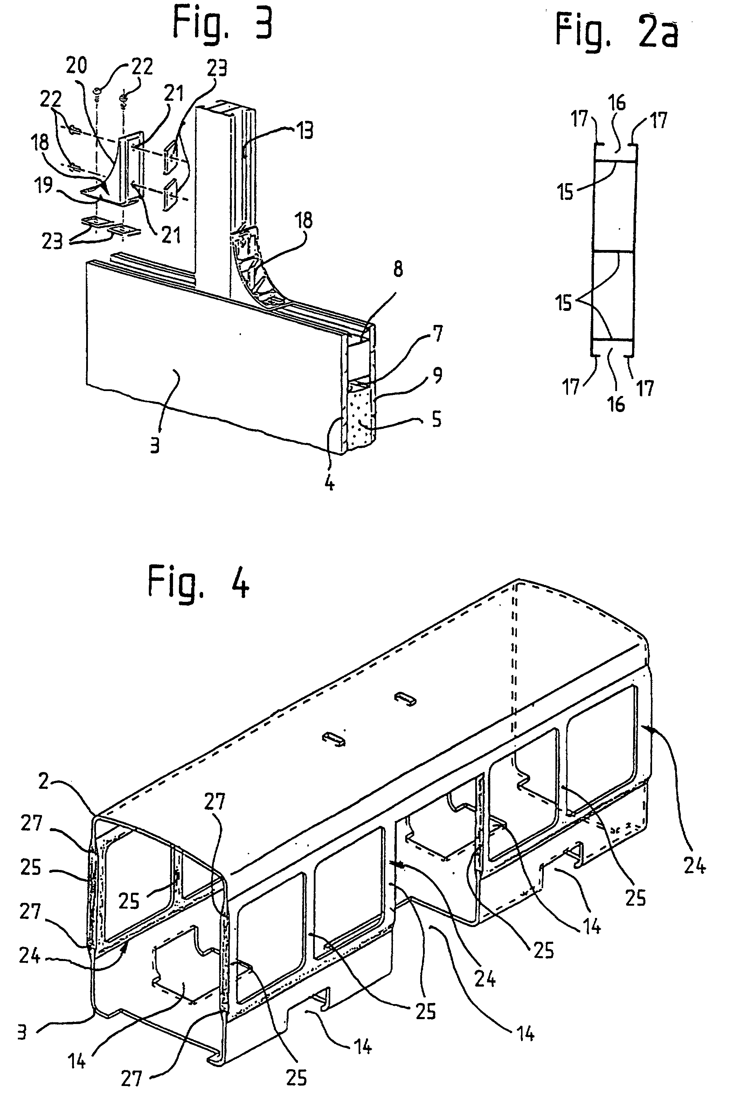

In den Fig. 1 bis 16 ist mit 1 ein Wickelkörper bezeichnet, der in Längsrichtung aufgetrennt wird, wobei die eine Hälfte als Dachschale 2 und die andere Hälfte als Bodenschale 3 für einen Wagenkasten in Hybridbauweise verwendet wird. Wie in EP-A1-0 554 539 dargestellt wird auf einen die Form des Wickelkörpers 1 gebenden Wickeldorn ein Innenwickel 4 gewickelt und ein beispielsweise aus Schaumstoff bestehender Kern 5 aufgelegt, wobei die Aushärtung des beispielsweise aus Fasersträngen, Harz und Härter bestehenden Innenwickels 4 unter Anpressdruck eines an der Wickeloberfläche applizierten Vakuums erreicht wird. Nach einer ersten Aushärtungsphase werden Spantnuten für Doppelspanten 6 und Längsnuten 7 für versteifende Längsprofile 8 in den Schaumstoffkern 5 eingefräst. Dann werden die Doppelspanten 6 wie in EP-A1-0 687 611 gezeigt gewickelt und nach dem Aushärten entlang der Längsnuten 7 durchgetrennt. In einem weiteren Arbeitsgang werden die beispielsweise aus Aluminium bestehenden Längsprofile 8 in die Längsnuten 7 wie in Fig. 3 dargestellt eingepasst und eingeklebt. Nach dem Aushärten des Klebers wird ein Aussenwickel 9 bestehend aus Fasersträngen, Harz und Härter auf den Schaumstoffkern 5 gewickelt und unter Anpressdruck eines an der Wickeloberfläche applizierten Vakuums ausgehärtet. Abschliessend wird Wickelkörper 1 auf dem Wickeldorn massgenau abgelängt und entlang der Längsprofile 8 durchgetrennt. Danach werden die beiden Wickelkörperhälften vom Wickeldorn entformt und als Dachschale 2 bzw. als Bodenschale 3 verwendet.

Fig. 1a zeigt Einzelheiten des Längsprofiles 8. Das als Hohlkörper ausgebildete Längsprofil 8 weist einen rechteckförmigen Querschnitt mit zwei Querstegen 10 auf, wobei je Schmalseite ein Langschlitz 11 angeordnet ist. Die Profilkanten entlang der Langschlitze 11 sind als Nasen 12 ausgebildet.

Fig. 2 zeigt einen aus Dachschale 2 und Bodenschale 3 bestehender Wagenkasten, wobei Dachschale 2 und Bodenschale 3 mittels Fenstersäulen 13 verbunden sind. Die Bodenschale 3 weist im Radkastenbereich und im Eingangsbereich Ausnehmungen 14 auf, die nach dem Entformen der Wickelkörperhälften vom Wickeldorn ausgeschnitten werden. Die Verbindung der Fenstersäulen 13 mit der Dachschale 2 und der Bodenschale 3 ist in Fig. 3 dargestellt.

Fig. 2a zeigt Einzelheiten einer Fenstersäule 13. Die als Hohlkörper ausgebildete Fenstersäule 13 weist einen rechteckförmigen Querschnitt mit drei Querstegen 15 auf, wobei je Schmalseite ein Langschlitz 16 angeordnet ist. Die Profilkanten entlang der Langschlitze 16 sind als Nasen 17 ausgebildet. Als Fenstersäule 13 können auch Profile gemäss Fig. 1a verwendet werden.

Fig. 3 zeigt ein Eckelement 18 für die Verbindung der Fenstersäulen 13 mit den Längsprofilen 8 der Bodenschale 3.

Das als Winkel ausgebildete Eckelement 18 weist je Schenkel 19, 20 Bohrungen 21 auf, durch die beispielsweise Schrauben 22 steckbar sind. In die Längsprofile 8 und in die Fenstersäulen 13 werden Nutsteine bzw. rechteckförmige Flachmuttern 23 eingelegt und mit den Schrauben 22 verschraubt, wobei die Muttern 23 an den Nasen 12, 17 gehalten werden.

Fig. 4 bis Fig. 10 zeigen eine weitere Ausführungsvariante zur Herstellung eines Wagenkastens in Hybridbauweise, bei der die Dachschale 2 und die Bodenschale 3 mittels vorgefertigten steckbaren Fensterrahmen 24 verbunden werden.

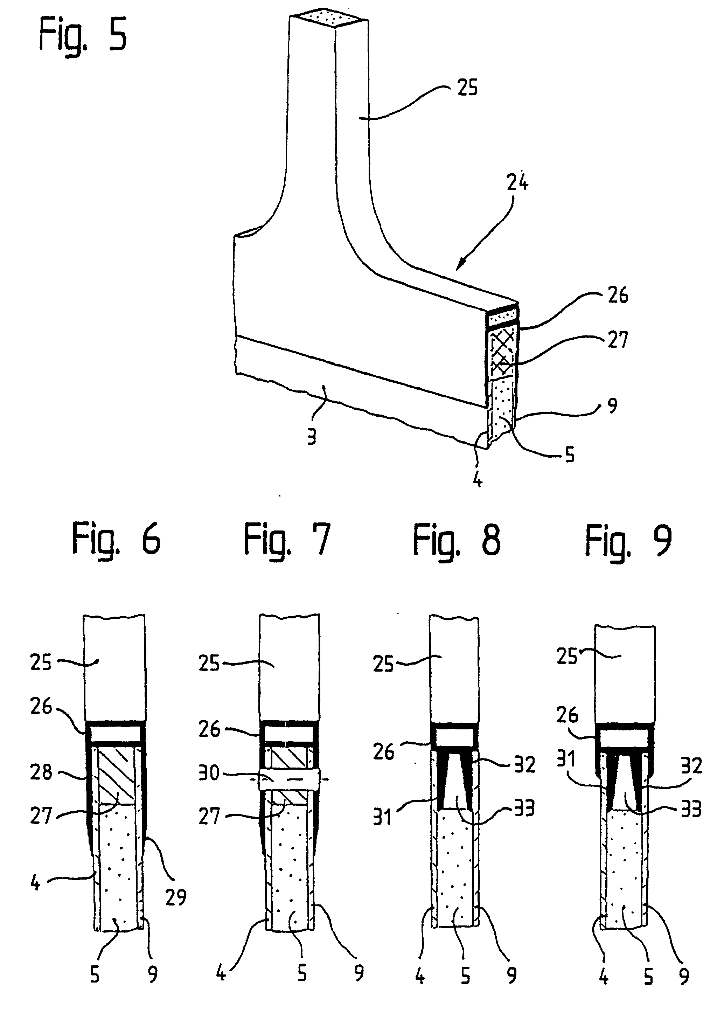

Fig. 5 zeigt Einzelheiten der Verbindung zwischen Fensterrahmen 24 und Dachschale 2 bzw. Bodenschale 3. Der Fensterrahmen weist eine Fenstersäule 25 und wickelkörperseitig ein Steckelement 26 auf. An der Dachschale 2 bzw. an der Bodenschale 3 wird ein versteifendes beispielsweise aus Harz und Glasfasern oder Kunststoffen oder Holz hergestelltes als Vollkörper ausgebildetes Längsprofil 27 eingewickelt, wobei der Innenwickel 4 und der Aussenwickel 9 das Längsprofil 27 seitlich überdecken.

Der beispielsweise aus Fasern, Harz und Härter bzw. Thermoplasten bestehende Fensterrahmen 24 wird nach dem allgemein bekannten RTM (Resin Transfer Moulding)-Verfahren hergestellt, bei dem ein Formwerkzeug verwendet wird. Die Faserverstärkung und allfällige Einlagen, Kerne, Funktionsteile etc. werden in das offene Formwerkzeug eingelegt und positioniert. Dann wird das Formwerkzeug geschlossen und ein im wesentlichen aus Harz und Härter bzw. Thermoplasten bestehendes Gemisch in das Formwerkzeug eingespritzt. Nach kurzer Reaktionsdauer wird das Formwerkzeug geöffnet und der fertige Fensterrahmen 24 entnommen.

Fig. 6 und Fig. 7 zeigen U-förmige Steckelemente 26, wobei freie Schenkel 28, 29 des Steckelementes 26 über den Innenwickel 4 bzw. Aussenwickel 9 formschlüssig gesteckt und kraftschlüssig verklebt werden. Zusätzlich zur formschlüssigen Verklebung kann wie in Fig. 7 gezeigt eine weitere Verbindung mittels Bolzen 30, Nieten oder Schrauben hergestellt werden.

Fig. 8 und 9 zeigen Steckelemente 26 mit V-förmig angeordneten Schenkeln 31, 32, die in die an der Dachschale 2 bzw. Bodenschale 3 angeordnete als Aussparung 33 dienende Längsnut 7 eingesteckt und kraftschlüssig verklebt werden, in der in den Ausführungsvarianten der Fig. 5 bis 7 das Längsprofil 27 angeordnet ist.

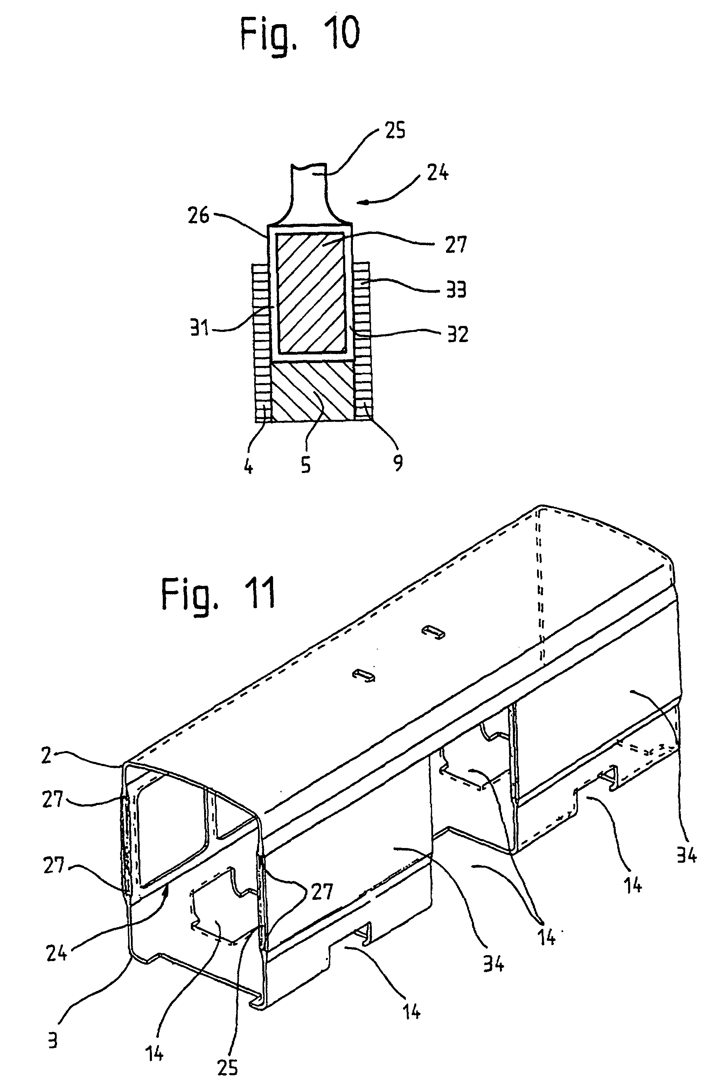

Fig. 10 zeigt Einzelheiten der Verbindung zwischen Festerrahmen 24 und Dachschale 2 bzw. Bodenschale 3. Bei diesem Fensterrahmen 24 ist das versteifende Längsprofil 27 in das Steckelement 26 mit parallel angeordneten Schenkeln 31, 32 des Fensterrahmens 24 integriert, wobei das Steckelement 26 in die am Schaumstoffkern 5 der Dachschale 2 bzw. Bodenschale 3 angeordnete als Aussparung 33 dienende Längsnut 7 eingesteckt und kraftschlüssig verklebt wird, in der in den Ausführungsvarianten der Fig. 5 bis 7 das Längsprofil 27 angeordnet ist.

Fig. 11 zeigt einen Wagenkasten in Hybridbauweise mit im steckbaren Fensterrahmen 24 vormontierten Fensterscheiben 34.

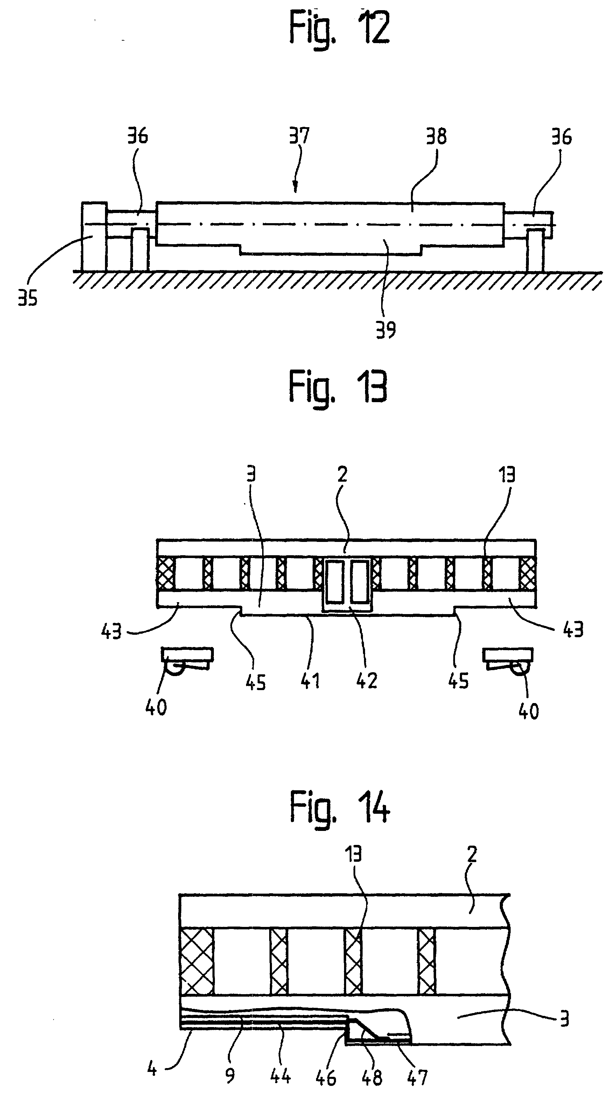

Fig. 12 bis 14 zeigen die Herstellung eines Niederflurwagens in Hybridbauweise. An einem von einer Wickelmaschine 35 angetriebenen Tragrohr 36 ist ein Wickeldorn 37 angeordnet, der aus einer ersten Dornkontur 38 für die Dachschale 2 und einer zweiten Dornkontur 39 für die Bodenschale 3 besteht. Die erste Dornkontur 38 hat beispielsweise die Form der in Fig. 1 gezeigten Dachschale 2. Die zweite Dornkontur 39 hat beispielsweise die Form der in Fig. 1 gezeigten Bodenschale 3 mit einem zwischen zwei Fahrwerken 40 liegenden Niederflurbereich 41. Eine mit 42 bezeichnete Tür ist in die in den Fig. 2, 4 und 11 gezeigte Ausnehmung 14 eingesetzt. Wickeln, Auftrennen der Dach- und Bodenschale und Zusammenbau des Niederflurwagens erfolgt gemäss Fig. 1 bis 11.

Zur Befestigung der Fahrwerke am Wagenkasten und zur Einleitung von Pufferkräften in den Wagenkasten werden wie in Fig. 14 gezeigt im Fahrwerkbereich 43 erste Verstärkungsprofile 44, im Übergangsbereich 45 eine Verstärkungswand 46 und im Niederflurbereich 41 zweite Verstärkungsprofile 47 eingewickelt. Beim Zusammenbau des Niederflurwagens werden im Übergangsbereich 45 ein Verstärkungsboden 48 und im Wageninnern nicht dargestellte tragende, den Wagenkasten versteifende Stirnwände eingesetzt.

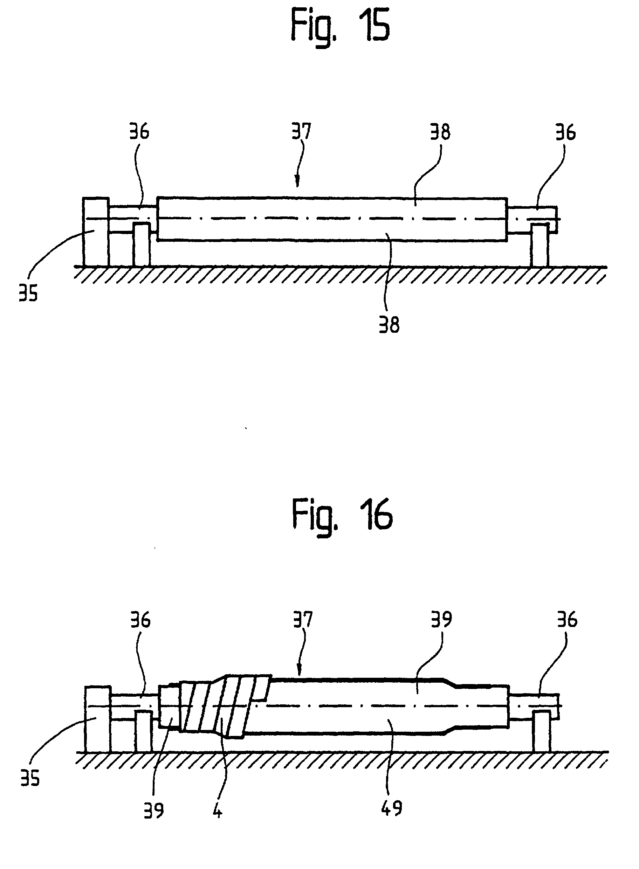

Fig. 15 und 16 zeigen einen Wickeldorn 37 mit einer Dornkontur 38 für zwei Dachschalen 2 bzw. einen Wickeldorn 37 mit einer Dornkontur 39 für zwei Bodenschalen 3. Die Dachschalen 2 können beispielsweise aus kostengünstigen Wekstoffkombinationen gewickelt werden, während die Herstellung der mechanisch hoch belasteten Bodenschalen 3 mit steiferen Faserwerkstoffen, beispielsweise Glasfasern oder Kohlefasern und entsprechenden Sandwichkernkombinationen erfolgen kann. Fig. 16 zeigt eine mit einem Grundmaterial 49 belegte Dornkontur 39, auf das nach dem Aushärten der Innenwickel 4 nass aufgewickelt wird. Anschliessend werden der Schaumstoffkern 5 und die in Fig. 1 bis 10 und 14 gezeigten Verstärkungen und Profile aufgelegt und dann mit dem Aussenwickel 4 eingedeckt.

## Patentansprüche

1. Verfahren zur Herstellung eines Wagenkastens in Hybridbauweise, bei dem auf einen Wickeldorn (37) mit einer formgebenden Dornkontur (38) ein Wickelkörper (1) gewickelt wird, der in Längsrichtung entlang einer Trennlinie in Wickelkörperhälften aufgetrennt wird, die als Bauteile (2) für den Wagenkasten verwendet werden,
**dadurch gekennzeichnet,**
**dass** der Wickelkörper (1) beim Wickelvorgang beidseitig der Trennlinie mit Verbindungselementen (8, 27) versehen wird, die der Verbindung mit Fensterrahmenelementen (13, 18, 24) dienen.

2. Verfahren nach Anspruch 1,
**dadurch gekennzeichnet,**
**dass** ein Innenwickel (4) auf den Wickeldorn (37) gewickelt wird und anschliessend ein Kern (5) aufgelegt wird,
**dass** beidseitig der Trennlinie im Kern (5) Längsnuten (7, 33) angeordnet werden, in die die Verbindungselemente (8, 27) eingelegt werden und
**dass** ein die Verbindungselemente (8, 27) überdeckender Aussenwickel (9) gewickelt wird.

3. Verfahren nach Anspruch 2,
**dadurch gekennzeichnet,**
**dass** als Verbindungselement ein Längsprofil (8) mit einem Langschlitz (11) für Nutsteine oder Muttern (23) verwendet wird.

4. Verfahren nach Anspruch 2,
**dadurch gekennzeichnet,**
**dass** als Verbindungselement ein als Vollkörper ausgebildetes Längsprofil (27) verwendet wird, das der Verbindung mit Steckelementen (26) eines Fensterrahmens (24) dient.

5. Verfahren nach Anspruch 2,
**dadurch gekennzeichnet,**
**dass** als Verbindungselement die als Aussparung (33) dienende Längsnut (7) verwendet wird, die der Verbindung mit Steckelementen (26) vorzugsweise mit integriertem Längsprofil (27) eines Fensterrahmens (24) dient.

6. Verfahren nach Anspruch 4 oder 5,
**dadurch gekennzeichnet,**
**dass** Schenkel (28, 29 bzw. 31, 32) der Steckelemente (26) auf das Längsprofil (27) bzw. in die als Aussparung (33) dienende Längsnut (7) steckbar sind und mit dem Innenwickel (4) und dem Aussenwickel (9) kraftschlüssig verklebt werden.

7. Verfahren nach den Ansprüchen 1 bis 6,
**dadurch gekennzeichnet,**
**dass** auf einen Wickeldorn (37) mit einer formgebenden Dornkontur (38, 39) ein Wickelkörper (1) für eine Dachschale (2) und eine Bodenschale (3) gewickelt wird.

8. Verfahren nach den Ansprüchen 1 bis 6,
**dadurch gekennzeichnet,**
**dass** auf einen Wickeldorn (37) mit einer formgebenden Dornkontur (39) ein Wickelkörper (1) für zwei Bodenschalen (3) oder zwei Dachschalen (2) gewickelt wird.

9. Verfahren nach den Ansprüchen 7 und 8,
**dadurch gekennzeichnet,**
**dass** eine Bodenschale (3) mit einem Fahrwerkbereich (43), zwei Übergangsbereichen (45) und einem Niederflurbereich (41) gewickelt wird, wobei in den Bereichen (43, 45, 41) Verstärkungsprofile (44, 46, 47) eingewickelt werden.

10. Wagenkasten in Hybridbauweise bestehend aus einer Dachschale, einer Bodenschale und aus Fensterreihen, die die Dachschale und die Bodenschale verbinden,
**dadurch gekennzeichnet,**
**dass** eine in Wickelbauweise hergestellte Dachschale (2) und Bodenschale (3) und in Profilbauweise hergestellte Fensterreihen vorgesehen sind, wobei entlang der Trennlinien der Dachschale (3) bzw. der Bodenschale (3) in der Dachschale (2) bzw. in der Bodenschale (3) integrierte Verbindungselemente (8,27,31,32) vorgesehen sind, die der Verbindung der Fensterreihen mit der Dachschale (2) bzw. mit der Bodenschale (3) dienen.

## Claims

1. Method of producing a carriage body in hybrid mode of construction, in which a wound body (1) is wound on a winding mandrel (37) with a shape-imparting mandrel contour (38) is separated in longitudinal direction along a separating line into wound body halves, the halves being used as components (2) for the carriage body, **characterised in that** the wound body (1) is provided during the winding process on both sides of the separating line with connecting elements (8, 27) which serves for connection with window frame elements (13, 18, 24).

2. Method according to claim 1, **characterised in that** an inner winding (4) is wound on the winding mandrel (37) and subsequently a core (5) is placed on, that longitudinal grooves (7, 33), in which the connecting elements (8, 27) are inserted, are arranged in the core (5) on both sides of the separating line and that an outer winding (9) covering the connecting elements (8, 27) is wound.

3. Method according to claim 2, **characterised in that** a longitudinal profile member (8) with a longitudinal slot (11) for groove blocks or nuts (23) is used as connecting element.

4. Method according to claim 2, **characterised in that** a longitudinal profile member (27), which is constructed as a solid body and which serves for the connection with plug elements (26) of a window frame (24), is used as connecting element.

5. Method according to claim 2, **characterised in that** the longitudinal groove (7), which serves as a cut-out (33) and for connecting with plug elements (26) preferably with an integrated longitudinal profile member (27) of a window frame (24), is used as connecting element.

6. Method according to claim 4 or 5, **characterised in that** limbs (28, 29 or 31, 32) of the plug elements (26) can be plugged onto the longitudinal profile member (27) or into the longitudinal groove (7) serving as a cut-out (33) and are glued in force-locking manner with the inner winding (4) and the outer winding (9).

7. Method according to any one of claims 1 to 6, **characterised in that** a wound body (1) for a roof shell (2) and a floor shell (3) is wound on a winding mandrel (37) with a shape-imparting mandrel contour (38, 39).

8. Method according to any one of claims 1 to 6, **characterised in that** a wound body (1) for two floor shells (3) or two roof shells (2) is wound on a winding mandrel (37) with a shape-imparting mandrel contour (39).

9. Method according to claims 7 and 8, **characterised in that** a floor shell (3) with a chassis region (43), two transition regions (45) and a lower floor region (41) is wound, wherein reinforcing profile members (44, 46, 47) are wound in in the regions (43, 45, 41).

10. Carriage body in hybrid mode of construction consisting of a roof shell, a floor shell and window rows which connect the roof shell and the floor shell, **characterised in that** a roof shell (2) and floor shell (3), which are produced in wound mode of construction, and window rows, which are produced in profile mode of construction, are provided, wherein connecting elements integrated in the roof shell (2) or in the floor shell (3) along the separating lines of the roof shell (3) or the floor shell (3) are provided and serve for connection.

## Revendications

1. Procédé pour fabriquer une caisse de véhicule à construction hybride, selon lequel on forme sur un mandrin d'enroulement (37) présentant un contour de formage (38) un corps enroulé (1) que l'on sépare dans le sens longitudinal, le long d'une ligne de séparation, en deux moitiés qui sont utilisées comme éléments de construction (2) pour la caisse de véhicule,
**caractérisé en ce que** lors de l'opération d'enroulement, le corps enroulé (1) est pourvu, des deux côtés de la ligne de séparation, d'éléments de liaison (8, 27) qui servent à la liaison avec des éléments de châssis de fenêtre (13, 18, 24).

2. Procédé selon la revendication 1, **caractérisé en ce qu'**on enroule un élément intérieur (4) sur le mandrin d'enroulement (37) et on pose ensuite un coeur (5), **en ce que** des deux côtés de la ligne de séparation, on dispose dans le coeur (5) des rainures longitudinales (7, 33) dans lesquelles on place les éléments de liaison (8, 27), et **en ce qu'**on enroule un élément extérieur (9) qui couvre les éléments de liaison (8, 27).

3. Procédé selon la revendication 2, **caractérisé en ce qu'**on utilise comme élément de liaison un profilé longitudinal (8) avec une fente longitudinale (11) pour des supports pour rainure ou pour des écrous (23).

4. Procédé selon la revendication 2, **caractérisé en ce qu'**on utilise comme élément de liaison un profilé longitudinal (27) conçu comme un corps plein, qui sert à la liaison avec les éléments d'emboîtement (26) d'un châssis de fenêtre (24).

5. Procédé selon la revendication 2, **caractérisé en ce qu'**on utilise comme élément de liaison la rainure longitudinale (7) servant de creux (33), qui sert à la liaison avec les éléments d'emboîtement (26), de préférence avec un profilé longitudinal intégré (27) d'un châssis de fenêtre.

6. Procédé selon la revendication 4 ou 5, **caractérisé en ce que** les branches (28, 29 ; 31, 32) des éléments d'emboîtement (26) sont aptes à être emboîtées sur le profilé longitudinal (27) ou dans la rainure longitudinale (7) servant de creux (33), et sont collées par adhérence aux éléments enroulés intérieur (4) et extérieur (9).

7. Procédé selon les revendications 1 à 6, **caractérisé en ce qu'**on forme sur un mandrin d'enroulement (37) présentant un contour de formage (38, 39) un corps enroulé (1) pour une coque formant toit (2) et une coque formant plancher (3).

8. Procédé selon les revendications 1 à 6, **caractérisé en ce qu'**on forme sur un mandrin d'enroulement (37) présentant un contour de formage (39) un corps enroulé (1) pour deux coques formant plancher (3) ou deux coques formant toit (2).

9. Procédé selon les revendications 7 et 8, **caractérisé en ce qu'**on forme par enroulement une coque formant plancher (3) avec une zone de train de roulement (43), deux zones de transition (45) et une zone de plate-forme surbaissée (41), des profilés de renforcement (44, 46, 47) étant intégrés dans l'enroulement, dans les zones (43, 45, 41).

10. Caisse de wagon à construction hybride, comprenant une coque formant toit, une coque formant plancher et des rangées de fenêtres qui relient les deux coques,
**caractérisée en ce qu'**il est prévu une coque formant toit (2) et une coque formant plancher (3) fabriquées par enroulement, et des rangées de fenêtres à construction profilée, étant précisé qu'on prévoit le long des lignes de séparation de la coque formant toit (2) et de la coque formant plancher (3) des éléments de liaison (8, 27, 31, 32) qui sont intégrés dans lesdites coques (2, 3) et qui servent à relier les rangées de fenêtres à celles-ci.
